# EUROPEAN PATENT SPECIFICATION

(11) **EP 3 068 008 B1**
(45) Date of publication and mention of the grant of the patent: **29.04.2020**
(21) Application number: 15275062.6
(22) Date of filing: 12.03.2015
(51) Int. Cl.: H02J 3/36, H02M 1/32, H02M 7/483

(54) **Improvements in or relating to hvdc power converters**
Verbesserungen an HGÜ-Leistungswandlern
Améliorations apportées ou relatives à des convertisseurs de puissance à courant continu à haute tension

(43) Date of publication of application: 14.09.2016
(73) Proprietor: General Electric Technology GmbH, 5400 Baden (CH)
(72) Inventor: GREGOIRE, Jerome, Birmingham B2 5RS (GB); CHIVITE-ZABALZA, Francisco Javier, Stafford, Staffordshire ST17 4XQ (GB); OATES, Colin Donald Murray, Brocton ST17 0TL (GB); MORENO MUÑOZ, Francisco Jose, Stafford ST16 2QZ (GB)
(74) Representative: Brevalex

(56) References cited:
- WO-A1-2013/064310
- WO-A2-2013/083414
- DE-A1-102005 040 543
- US-A- 5 986 909

## Description

This invention relates to an electrical assembly for use in a limb portion of a converter limb within a high voltage direct current (HVDC) power converter.

In HVDC power transmission, alternating current (AC) electrical power is converted to high voltage direct current (DC) power for transmission via overhead lines and/or undersea cables. This conversion reduces the cost per kilometre of the lines and/or cables, and is therefore cost-effective when power needs to be transmitted over a long distance. Once the transmitted electrical power reaches its target destination, the high voltage DC electrical power is converted back to AC electrical power before being distributed to local networks.

The conversion of AC power to DC power is also commonly utilized in power transmission networks in circumstances where it is necessary to interconnect two AC networks operating at different frequencies.

HVDC power converters are required at each interface between AC and DC networks to effect the required conversion between AC power and DC power.

WO 2013/064310 describes an inverter circuit having at least two phase modules, each having first and second partial inverter systems comprising an inductance and n two-pole switch cells connected in series thereto, where n >= 2. Each switch cell has bidirectional power semiconductor switches, which can be actuated, having a controlled, unidirectional current conducting direction and a capacitive energy store. For each phase module, the inductances of the first and second partial inverter systems are serially connected, with a phase connection being formed by the connection points of the inductances of the first and second partial inverter systems. A short-circuit element is connected in parallel to each switch cell to the connection poles thereof in order to contain a fault current in a partial inverter system and an interrupting element is serially connected between the associated short-circuit element and the switch cell.

WO 2013/083414 describes a method for eliminating an arc driven by at least one phase voltage source of a converter circuit, comprising monitoring a state variable of the converter circuit for a predeterminable threshold value of the state variable to detect an arc, and actuating at least one of a plurality of actuatable power semiconductor switches of the converter unit upon detecting a discrepancy between the state variable and the predeterminable threshold value.

The present invention resides in an electrical assembly as defined in the appended claims.

According to an aspect of the invention there is provided an electrical assembly, for use in a limb portion of a converter limb within a HVDC power converter, the electrical assembly comprising at least one switching assembly including one or more semiconductor switches, the or each semiconductor switch being selectively switchable between conducting and non-conducting conditions, the or each semiconductor switch in the conducting condition allowing current to flow through the said semiconductor switch in a first forward direction and thereby through the said switching assembly in the same forward direction, the or each switching assembly having a bypass protection circuit connected in parallel therewith, the or each bypass protection circuit including a first semiconductor protection element selectively switchable between conducting and non-conducting conditions,the or each said first semiconductor protection element while in the conducting condition providing a first current-conducting path in the forward direction to divert current flowing in the forward direction through the switching assembly away from the switching assembly.

The inclusion of such a bypass protection circuit, and more particularly the inclusion therein of a first semiconductor protection element that is able selectively to provide a current-conducting path in the forward direction, permits the electrical assembly of the invention to handle obscure and unusual fault currents that flow in the forward direction. Such forward fault currents might arise because of a disturbance on an AC side of a power converter in which the electrical assembly of the invention is installed, because of a failure in the control hardware of such a power converter, or because of some other erroneous event.

In each instance the first semiconductor protection element is able to react quickly to the presence of a forward fault current which might otherwise, damage, impair or endanger the associated switching assembly if not diverted away therefrom.

In addition, the first semiconductor protection element can be switched readily and remotely back into a non-conducting condition following the removal of the fault and resulting forward fault current, e.g. without the need to secure physical access to the bypass protection circuit which might otherwise be extremely difficult and/or necessitate the costly interruption of operation of a power converter in which the electrical assembly of the invention is located.

Optionally one or more bypass protection circuits includes a second semiconductor protection element arranged to provide a second current-conducting path in a second reverse direction opposite the forward direction to divert current flowing in a reverse direction through the corresponding switching assembly away from the said switching assembly.

The inclusion of such a second semiconductor protection element allows the electrical assembly of the invention to additionally handle conventional, DC fault currents which typically flow in the said reverse direction.

In a preferred embodiment of the invention the second semiconductor protection element of one or more bypass protection circuits is or includes a passive current check element that continually permits current to flow therethrough in the reverse direction while continually blocking the flow of current therethrough in the forward direction.

Providing such a second semiconductor protection element assists in ensuring permanent bypass protection in the reverse direction without the need to detect a reverse fault current or initiate a switching operation, and so helps to ensure that the electrical assembly of the invention is able to deal with conventional, and more numerous DC faults, i.e. faults that give rise to a fault current flowing in the reverse direction.

It also permits a sharing of current between the second semiconductor protection element and the associated switching assembly during normal operation of a power converter in which the electrical assembly of the invention is, in use, installed, and so additionally helps to reduce losses within the said power converter.

The second semiconductor protection element of one or more bypass protection circuits may be or include a semiconductor switch selectively switchable between conducting and non-conducting conditions.

The inclusion of a second semiconductor protection element that is selectively switchable between conducting and non-conducting conditions allows use of such a second semiconductor protection element to be limited to the handling of DC faults only, i.e. faults that give rise to a fault current flowing in the reverse direction. Accordingly, during normal operation of a power converter in which the electrical assembly of the invention is, in use, installed, such a second semiconductor protection element can be switched into a non-conducting condition so that sharing of current between the second semiconductor protection element and the associated switching assembly is prevented. Preventing such current sharing allows for the selection of a second semiconductor protection element with lower performance characteristics, i.e. slower switching, that would otherwise be the case, and so reduces the cost of the second semiconductor protection element. In addition, the duty cycle of the second semiconductor protection element is lower than would be the case if current sharing occurred, and so the life expectancy of the second semiconductor protection element is increased.

Preferably the first semiconductor protection element of one or more bypass protection circuits is connected in series with a current-limiting reactor.

Having a reactor connected in series with a respective first semiconductor protection element helps to limit the rate of rise of current flowing through the first semiconductor protection element when it is switched into a conducting condition, and thereby helps to prevent damage to the first semiconductor protection element.

Such an arrangement also helps to prevent spurious switching of the first semiconductor protection element into its conducting condition, e.g. as may otherwise be occasioned by an excess change in forward voltage across the first semiconductor protection element during switching within the associated switching assembly.

Optionally the first semiconductor protection element of one or more bypass protection circuits is connected in parallel with a snubber circuit.

Arranging a snubber circuit in such a manner helps to dampen voltage variations across the said first semiconductor protection element while it is in its non-conducting condition, and also to help limit a voltage overshoot when the first semiconductor protection element is switched from its conducting condition to its non-conducting condition.

In another preferred embodiment of the invention the or each first semiconductor protection element is arranged in operative communication with a local control unit programmed to at least switch a said first semiconductor protection element into its conducting condition.

Such an arrangement desirably achieves selective switching of the or each said first semiconductor protection element.

The or each local control unit may be arranged to draw power from an adjacent component within the electrical assembly.

Having the or each local control unit so arranged permits the or each said local control unit to operate independently, e.g. when a higher-level control unit is de-energised.

Preferably the or each local control unit is further programmed to act in accordance with an operating condition of a higher-level control unit with which it is, in use, arranged in operative communication.

Such an arrangement helps to further optimise operation of the or each corresponding bypass protection circuit.

The foregoing arrangements desirably permit the inclusion of the electrical assembly of the invention in a wide range of power converters.

There now follows a brief description of preferred embodiments of the invention, by way of non-limiting example, with reference being made to the accompanying drawings in which:
Figure 1 shows a schematic view of an electrical assembly according to a first embodiment of the invention located within a limb portion of a converter limb in a HVDC power converter;
Figure 2(a) shows a first example chain-link sub-module for inclusion in the electrical assembly shown in Figure 1;
Figure 2(b) shows a second example chain-link sub-module for inclusion in the electrical assembly shown in Figure 1;
Figure 3 shows a portion of an electrical assembly according to a second embodiment of the invention;
Figure 4 shows a portion of an electrical assembly according to a third embodiment of the invention;
Figure 5 shows a further bypass protection circuit for inclusion in an electrical assembly according to another embodiment of the invention;
Figure 6 shows a still further bypass protection circuit for inclusion in an electrical assembly according to yet another embodiment of the invention; and
Figure 7 shows one example of how a local control unit may be arranged to draw power from an adjacent component within a corresponding electrical assembly according to an embodiment of the invention.

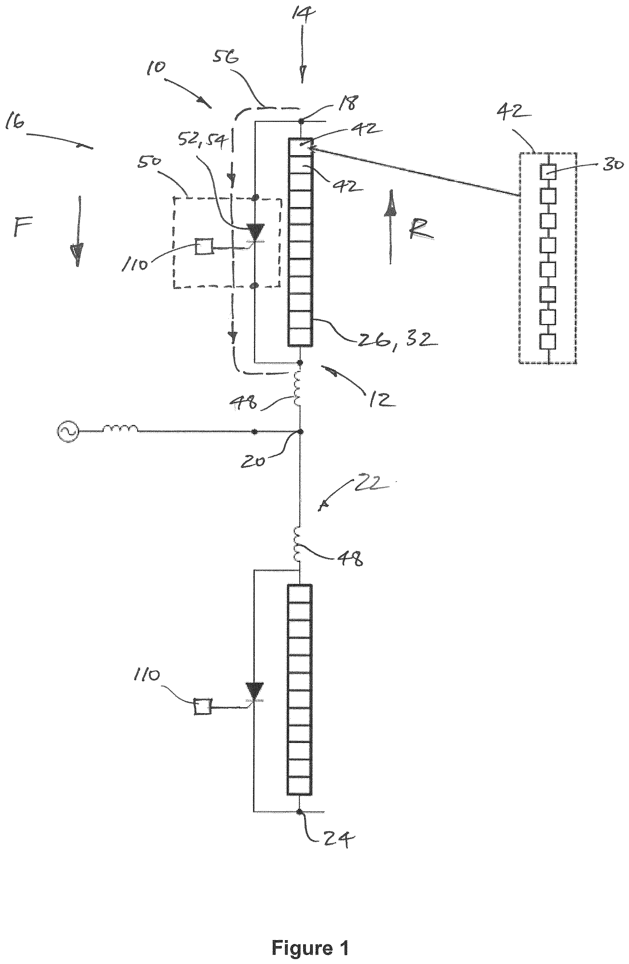

An electrical assembly according to a first embodiment of the invention is designated generally by reference numeral 10 and is shown in Figure 1.

The first electrical assembly 10 lies within a first limb portion 12 of a converter limb 14 of a HVDC power converter 16. The first limb portion 12 extends between a first DC terminal 18 and an AC terminal 20 within the converter limb 14 and a second limb portion 22 extends between the AC terminal 20 and a second DC terminal 24 to complete the converter limb 14. In the embodiment shown the second limb portion 22 includes an identical first electrical assembly 10, although this need not necessarily be the case.

Each first electrical assembly 10 includes a single first switching assembly 26 that includes a plurality of first semiconductor switches 28.

More particularly the single first switching assembly 26 in each first electrical assembly 10 includes a plurality of first chain-link sub-modules 30 which together define a chain-link converter 32.

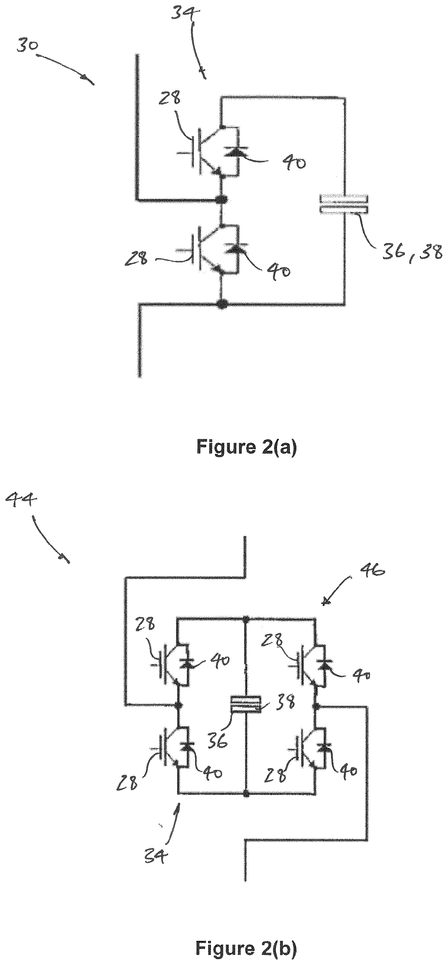

More particularly still, each first chain-link sub-module 30 includes a first pair 34 of first semiconductor switches 28 that are connected in parallel with an energy storage device 36 in the form of a capacitor 38 (although other forms of energy storage device are also possible) in a known half-bridge arrangement to define a 2-quadrant unipolar module, as shown in Figure 2(a).

Each of the first semiconductor switches 28 takes the form of an Insulated Gate Bipolar Transistor (IGBT) which is selectively switchable between a conducting condition, i.e. on, and a non-conducting condition, i.e. off. Other semiconductor switches 28 are, however, also possible.

Each semiconductor switch 28 when in its conducting condition allows current to flow therethrough in a first forward direction F, and thereby allows current to similarly flow through the first switching assembly 26 in the same forward direction F.

Each first semiconductor switch 28 is connected in parallel with an anti-parallel diode 40, whereby switching of the first semiconductor switches 28 between their conducting and non-conducting conditions, i.e. on and off, selectively directs current through the capacitor 38 or causes current to bypass the capacitor 38 such that each first chain-link sub-module 30 can provide zero or positive voltage and can conduct current in both the forward direction F and in a second, opposite reverse direction R.

In this manner it is possible to build up a combined voltage across the chain-link converter 32, via insertion of the capacitors 38 of multiple first chain-link sub-modules 30 (with each sub-module 30 providing its own voltage), which is higher than the voltage available from each individual sub-module 30.

Accordingly, each of the first chain-link sub-modules 30 works together to permit the chain-link converter 32 to provide a stepped variable voltage source.

The first chain-link sub-modules 30 are, conveniently, arranged in groups of eight to define a chain-link module 42, as also shown in Figure 1. This need not necessarily be the case however and, in other embodiments of the invention (not shown), the first chain-link sub-modules 30 may be arranged in groups of more than or less than 8 to define a further chain-link module.

Figure 2(b) shows an example second chain-link sub-module 44 which may, in an alternative embodiment of the invention, replace one or more of the first chain-link sub-modules 30 in the first switching assembly 26 of each first electrical assembly 10 shown in Figure 1.

In the second chain-link sub-module 44, first and second pairs 34, 46 of first semiconductor switches 28 (again each with a respective anti-parallel diode 40 connected in parallel therewith) and a capacitor 38 are connected in a known full-bridge arrangement to define a 4-quadrant bipolar module. Switching of the first semiconductor switches 28 again selectively directs current through the capacitor 38 or causes current to bypass the capacitor 38 such that the second chain-link sub-module 44 can provide zero, positive or negative voltage and can conduct current in each of forward and reverse directions F, R.

In still further embodiments of the invention, the single first switching assembly may include a single semiconductor switch (not shown), e.g. in the form of a thyristor, or a plurality of series-connected semiconductor switches (also not shown), e.g. in the form of a series-connected string of thyristors.

In yet further embodiments of the invention, both the single first switching assembly shown in Figure 1 and the first switching assembly in each of the aforementioned further embodiments may additionally include a limb portion inductor, e.g. such as the limb portion inductor 48 lying outside each of the first switching assemblies shown in Figure 1.

Returning to the first electrical assembly shown in Figure 1, the first switching assembly 26 thereof has a first bypass protection circuit 50 connected in parallel therewith.

The first bypass protection circuit 50 includes a first semiconductor protection element 52 which, in the embodiment shown, is a first thyristor 54, although other types of semiconductor may also be used. Such other types of semiconductor include, by way of example, turn off type semiconductors such as a Gate Turn Off Thyristor (GTO), an Integrated Gate-Commutated Thyristor (IGCT) or an IGBT of module or press-pack type. In addition, a string of series-connected thyristors or other semiconductors may also be used.

The first semiconductor protection element 52, i.e. the first thyristor 54, is selectively switchable between conducting and non-conducting conditions. More particularly, the first thyristor 54 is turned on by an associated control unit so as to adopt its conducting condition, while it is turned off by the operating conditions in the surrounding circuit in order to adopt its non-conducting condition. Typically such turn off of the first thyristor 54 arises when the current passing through the first thyristor 54 is driven down to a level near zero (i.e. below the holding current level of the first thyristor 54) and a reverse-biased voltage is applied to the first thyristor 54. In contrast, other types of first semiconductor protection element 52 may be both turned on and turned off by an associated control unit.

In any event, while in its conducting condition, i.e. while on, the first semiconductor protection element 52 provides a first current-conducting path 56 in the forward direction F.

In use, while in its conducting conduction (i.e. while on), the first semiconductor protection element 52 is able to divert current flowing in the forward direction F through the first switching assembly 26, e.g. a fault current, away from the first switching assembly 26 to thereby help protect from damage the first switching elements 28 in the various first chain-link sub-modules 30 lying within the first switching assembly 26.

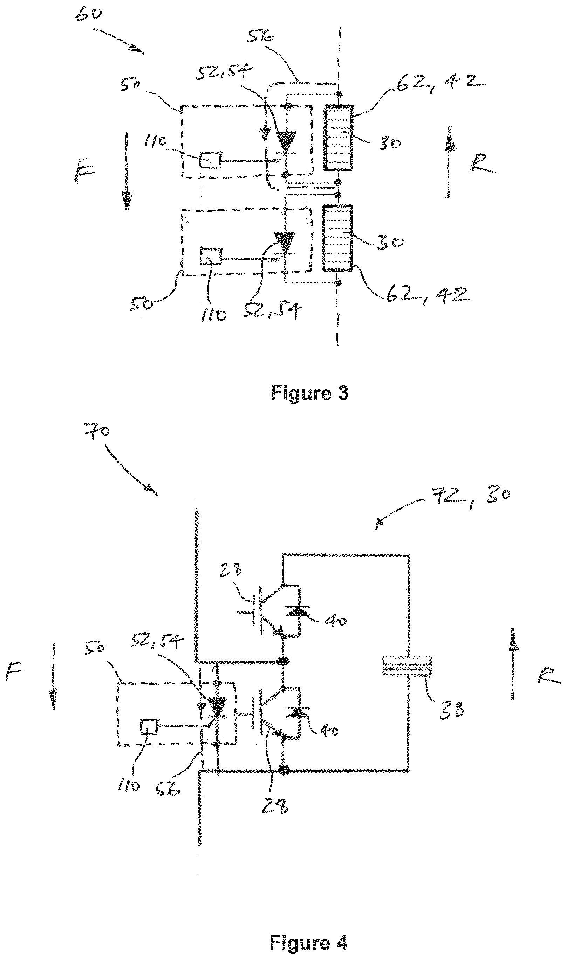

A portion of an electrical assembly 60 according to a second embodiment of the invention is illustrated schematically in Figure 3.

The second electrical assembly 60 is similar to the first electrical assembly 10 and like features share the same reference numerals.

The second electrical assembly 60 differs from the first electrical assembly 10 in that it includes a plurality of series-connected second switching assemblies 62 (only two of which are shown in Figure 3).

Each second switching assembly 62 includes eight first chain-link sub-modules 30 that are arranged to define a chain-link module 42. In other embodiments, however, each second switching assembly 62 may include fewer than or more than eight first chain-link sub-modules 30, and indeed may instead or additionally include any number of second chain-link sub-modules 44. In still further other embodiments, one or more of the second switching assemblies 62 may include a single semiconductor switch (not shown), e.g. in the form of a thyristor, or a plurality of series-connected semiconductor switches (also not shown), e.g. in the form of a series-connected string of thyristors.

In each such embodiment, including the embodiment shown in Figure 3, each second switching assembly 62 has a first bypass protection circuit 50 connected in parallel therewith.

Accordingly, in use of the second electrical assembly 60, while the first protection element 52 in each first bypass protection circuit 50 is in its conducting conduction (i.e. while on), it is able to divert current, e.g. a fault current, flowing in the forward direction F through the corresponding second switching assembly 62 with which it is connected in parallel, away from the said corresponding second switching assembly 62.

The respective first protection elements 52 thereby again similarly help to protect from damage the first switching elements 28 in the various first chain-link sub-modules 30 lying within the second switching assembly 62.

A portion of an electrical assembly 70 according to a third embodiment of the invention is illustrated schematically in Figure 4.

The third electrical assembly 70 is similar to each of the first and second electrical assemblies 10; 60 and like features share the same reference numerals.

The third electrical assembly 70 differs from both the first and second electrical assemblies 10; 60 in that it includes a plurality of series-connected third switching assemblies 72 (only one of which is shown in Figure 4).

Each third switching assembly 72 includes a single first chain-link sub-module 30, although in other embodiments one or more of the third switching assemblies 72 may instead include a second chain-link sub-module 44.

In either such embodiment, each third switching assembly 72 has a first bypass protection circuit 50 connected in parallel therewith.

Accordingly, in use of the third electrical assembly 70, while the first protection element 52 in each first bypass protection circuit 50 is in its conducting conduction (i.e. while on), it is able to divert current, e.g. a fault current, flowing in the forward direction F through the corresponding third switching assembly 72 with which it is connected in parallel, away from the said corresponding third switching assembly 72.

The respective first semiconductor protection elements 52 thereby again similarly help to protect from damage the first pair 34 of first switching elements 28 in the first chain-link sub-module 30 lying within the third switching assembly 72.

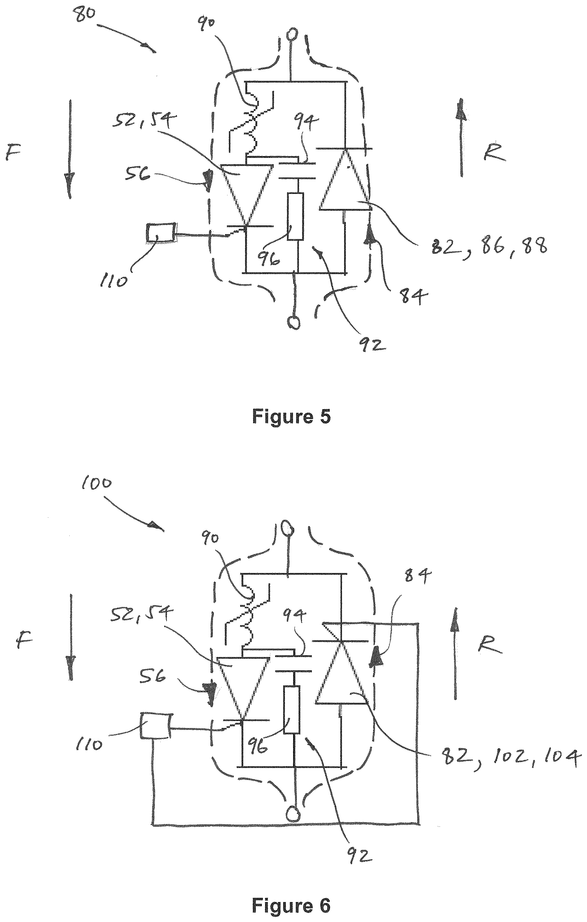

A second bypass protection circuit 80 is shown schematically in Figure 5.

The second bypass protection circuit 80 may replace one or more of the first bypass protection circuits 50 in any of the aforementioned first, second or third electrical assemblies 10; 60; 70.

The second bypass protection circuit 80 is similar to the first bypass protection circuit 50 and like features share the same reference numerals. However, the second bypass protection circuit 80 differs from the first bypass protection circuit 50 in that it additionally includes a second semiconductor protection element 82 which is arranged in parallel with the first semiconductor protection element 52 to provide a second current-conducting path 84 in the reverse direction R.

The second semiconductor protection element 82 is a passive current check element 86 that continually permits current to flow therethrough in the reverse direction R while continually blocking the flow of current therethrough in the forward direction F. A suitable form of passive current check element 86 is, as shown, a diode 88 although other forms are also possible.

In other embodiments of the invention (not shown) the second semiconductor protection element 82 may be formed by a plurality of parallel-connected passive current check elements, e.g. a plurality of parallel-connected diodes.

In use, the first current conducting path 56 of the second bypass protection circuit 80 functions in the same manner as described hereinabove in relation to the first bypass protection circuit 50. Meanwhile, as necessary, the second current conducting path 84 provided by the second semiconductor protection element 82 diverts current flowing in the reverse direction through the corresponding switching assembly 26; 62; 72, e.g. a DC fault current, away from the said corresponding switching assembly 26; 62; 72.

The second semiconductor protection element 82 thereby similarly helps to protect from damage the first switching elements 28 lying within a corresponding switching assembly 26; 62; 72.

In addition to the foregoing, in the second bypass protection circuit 80 shown, the first semiconductor protection element 52 is connected in series with a current-limiting reactor 90, and in parallel with a snubber circuit 92 including a series-connected capacitor 94 and resistor 96. In the embodiment shown the current-limiting reactor 90 is saturable although this need not necessarily be the case.

The first semiconductor protection element 52 in the first bypass protection circuit 50 may similarly have one or both of a current-limiting reactor 90 connected in series therewith and a snubber circuit 92 connected in parallel therewith.

Figure 6 shows in schematic form a third bypass protection circuit 100.

The third bypass protection circuit 100 may replace one or more of both the first and second bypass protection circuits 50; 80 in any of the aforementioned first, second or third electrical assemblies 10; 60; 70 described hereinabove.

The third bypass protection circuit 100 is similar to the second bypass protection circuit 80 and like features again share the same reference numerals. The third bypass protection circuit 100 does, however, differ from the second bypass protection circuit 80 in that it includes a second semiconductor protection element 82 in the form of a second semiconductor switch 102, and more particularly in the form of a second thyristor 104.

In still further embodiments of the invention (not shown) the second semiconductor protection element 82 in the third bypass protection circuit 100 may instead be formed from a string of series-connected second thyristors 104.

In either case, the second semiconductor protection element 82 in the third bypass protection circuit 100 is switchable between conducting and non-conducting conditions.

Accordingly, when in a conducting condition the second semiconductor protection element 82, i.e. the second thyristor 104, permits current to flow therethrough in the reverse direction R, while when in a non-conducting condition the second thyristor 104 blocks the flow of current therethrough in the forward direction F.

In use, the first current conducting path 56 of the third bypass protection circuit 100 again functions in the same manner as described hereinabove in relation to the first bypass protection circuit 50.

Meanwhile, as required, the second current conducting path 84 provided by the second semiconductor protection element 82, i.e. the second thyristor 104, selectively diverts current flowing in the reverse direction through the corresponding switching assembly 26; 62; 72, e.g. a DC fault current, away from the said corresponding switching assembly 26; 62; 72.

The second semiconductor protection element 82, i.e. the second thyristor 104, thereby again similarly helps to protect from damage the first switching elements 28 lying within a corresponding switching assembly 26; 62; 72.

In each of the first, second and third bypass protection circuits 50; 80; 100 described above, the first semiconductor protection element 52 is arranged in operative communication with a local control unit 110 that is programmed to switch the corresponding first semiconductor protection element 52 into its conducting condition. In other embodiments of the invention, e.g. in embodiments including other types of first semiconductor protection element 52 that can be both turned on and turned off by an associated control unit, the local control unit may be programmed to switch the corresponding first semiconductor protection element 52 between its conducting and non-conducting conditions.

In addition, in the third bypass protection circuit 100 the local control unit 110 is also arranged in operative communication with the second semiconductor protection element 82, i.e. the second semiconductor switch 102 in the form of the second thyristor 104, although this need not necessarily be the case.

In the various embodiments shown, each local control unit 110 is shown in operative communication with a single corresponding first semiconductor protection element 52. In other embodiments of the invention, however, one or more local control units 110 may be arranged in operative communication with a plurality of corresponding first (and/or second) semiconductor protection elements 52.

In any event, each local control unit 110 is arranged to draw power from an adjacent component within the corresponding electrical assembly 10; 60; 70.

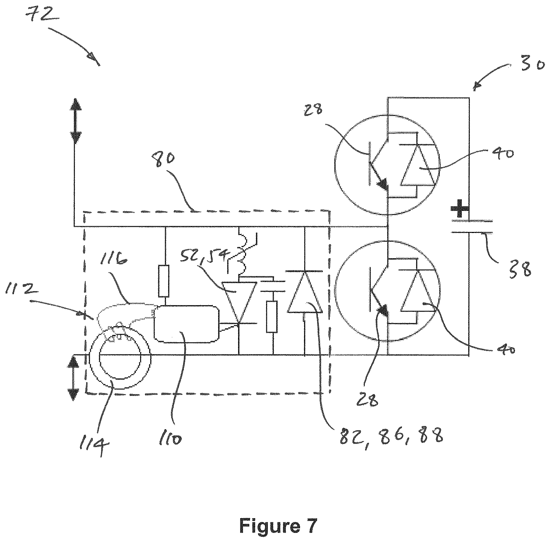

One example of how this is achieved in illustrated schematically in Figure 7 which shows a third switching assembly 72 connected in parallel with which is a second bypass protection circuit 80.

The third switching assembly 72 shown includes a power extraction circuit 112 that has a coil 114 which bisects the current path extending through the first chain-link sub-module 30 that defines the third switch assembly 72.

An AC current flowing through the first chain-link sub-module 30 creates a magnetic flux which in turn generates a current in a conductor 116, e.g. a wire, that is wrapped around the coil 114. The conductor 116 is electrically connected with the local control unit 110 and so the generated current is able, via a rectifying means, to charge an energy storage device, e.g. a battery (not shown), on the local control unit 110. The battery is able subsequently to provide power to operate the said local control unit 110.

As an alternative to the foregoing arrangement, a voltage appearing across the first chain-link sub-module 30 or across the capacitor 94 of an associated snubber circuit 92, may be used to charge the energy storage device within the local control unit 110. In such instances a resistor may be used to limit the current provided to the energy storage device.

One or more of the local control units may, however, draw power in a different manner to the two techniques set out above. Such different manners of drawing power may include obtaining power from a nearby device, e.g. by way of a current loop or scavenging a voltage such as a capacitor voltage. It might also include ground powering with adequate electrical isolation, e.g. light triggered or laser power.

In addition to the above, in the embodiments shown each local control unit 110 is further programmed to act in accordance with an operating condition of a higher-level control unit (not shown) with which it is, in use, arranged in operative communication.

For example the local control unit 110 may operate on its own if the higher-level control unit becomes de-energized or if the voltage across a particular chain-link sub-module 30; 44 becomes too high and is communicated as such by the higher-level control unit. In this latter regard the local control unit 110 is thereby able to provide a degree of overvoltage protection.

The local control unit 110 may also be deactivated by the higher-level control unit if the higher-level control unit is operating normally and is fully energised.

In addition, the local control unit 110 may be delay acting in order to allow the voltage across one or more chain-link sub-modules 30; 44 to rise to a minimum level, as set by the higher-level control unit.

More, particularly, if the voltage has risen sufficiently and the higher-level control unit is operating normally, the various local control units 110 will each be placed in a standby mode. Alternatively, if the voltage has risen sufficiently but the higher-level control unit is not operating normally, each local control unit 110 will be placed in an operational mode.

A further consideration is that the power up time of each of the local control units 110 should be coordinated to allow the higher-level controller sufficient time to power up also.

## Claims

1. An electrical assembly (60), for use in a limb portion (12, 22) of a converter limb (14) within a HVDC power converter (16), the electrical assembly (60) comprising a plurality of switching assemblies (62), each switching assembly (62) including a plurality of chain-link sub-modules (44) arranged to define a chain-link module (42), each chain-link sub-module (44) including at least one semi-conductor switch (28) and at least one energy storage device (38), the or each semi-conductor switch (28) and the or each energy storage device (38) of each chain-link sub-module (44) combining to selectively provide a voltage source, each semi-conductor switch (28) being selectively switchable between conducting and non-conducting conditions, each semi-conductor switch (28) in the conducting condition allowing current to flow through the said semi-conductor switch (28) in a first forward direction and thereby through the said switching assembly (62) in the same forward direction, each switching assembly (62) having a bypass protection circuit (50) connected in parallel therewith, each bypass protection circuit (50) including a first semiconductor protection element (52) selectively switchable between conducting and non-conducting conditions, the or each said first semiconductor protection element (52) while in the conducting condition providing a first current-conducting path (56) in the forward direction (F) to divert current flowing in the forward direction (F) through the corresponding switching assembly (62) away from the said corresponding switching assembly (62).

2. An electrical assembly according to Claim 1, wherein one or more bypass protection circuits (50, 80) includes a second semiconductor protection element (82) arranged to provide a second current-conducting path (56) in a second reverse direction (R) opposite the forward direction (F) to divert current flowing in a reverse direction through the corresponding switching assembly (62) away from the said switching assembly (62).

3. An electrical assembly according to Claim 2, wherein the second semiconductor protection element (82) of one or more bypass protection circuits (80) is or includes a passive current check element (86) that continually permits current to flow therethrough in the reverse direction (R), while continually blocking the flow of current therethrough in the forward direction (F).

4. An electrical assembly according to Claim 2, wherein the second semiconductor protection element (82) of one or more bypass protection circuits (80) is or includes a semiconductor switch (54, 104) selectively switchable between conducting and non-conducting conditions.

5. An electrical assembly according to any preceding claim, wherein the first semiconductor protection element (52) of one or more bypass protection circuits (50, 80) is connected in series with a current-limiting reactor (90).

6. An electrical assembly according to any preceding claim, wherein the first semiconductor protection element (52) of one or more bypass protection circuits (50, 80) is connected in parallel with a snubber circuit (92).

7. An electrical assembly according to any preceding claim, wherein the or each first semiconductor protection element (52, 82) is arranged in operative communication with a local control unit (110) programmed to at least switch a said first semiconductor protection element (52) into its conducting condition.

8. An electrical assembly according to Claim 7, wherein the or each local control unit (110) is arranged to draw power from an adjacent component within the electrical assembly (60, 70).

9. An electrical assembly according to Claim 7 or Claim 8, wherein the or each local control unit (110) is further programmed to act in accordance with an operating condition of a higher-level control unit with which it is, in use, arranged in operative communication.

## Patentansprüche

1. Elektrische Baugruppe (60), zum Gebrauch in einem Schenkelabschnitt (12, 22) eines Wandlerschenkels (14) innerhalb eines HGÜ-Leistungswandlers (16), die elektrische Baugruppe (60) umfassend eine Vielzahl von Schaltbaugruppen (62), jede Schaltbaugruppe (62) einschließlich einer Vielzahl von Kettengliedsubmodulen (44), die angeordnet sind, um ein Kettengliedmodul (42) zu definieren, jedes Kettengliedsubmodul (44) einschließlich mindestens eines Halbleiterschalters (28) und mindestens einer Energiespeichervorrichtung (38), wobei der oder jeder Halbleiterschalter (28) und die oder jede Energiespeichervorrichtung (38) jedes Kettengliedsubmoduls (44) kombiniert werden, um selektiv eine Spannungsquelle bereitzustellen, wobei jeder Halbleiterschalter (28) selektiv zwischen leitenden und nicht leitenden Zuständen schaltbar ist, wobei es jeder Halbleiterschalter (28) in dem leitenden Zustand ermöglicht, dass Strom durch den Halbleiterschalter (28) in einer ersten Vorwärtsrichtung und dadurch durch die Schaltbaugruppe (62) in der gleichen Vorwärtsrichtung fließt, wobei jede Schaltbaugruppe (62) einen Bypass-Schaltkreis zum Schutz (50) aufweist, der damit parallel geschaltet ist, jeder Bypass-Schaltkreis zum Schutz (50) einschließlich eines ersten Halbleiterschutzelements (52), das selektiv zwischen leitenden und nicht leitenden Zuständen schaltbar ist, wobei das oder jedes erste Halbleiterschutzelement (52), während es sich in dem leitenden Zustand befindet, einen ersten stromleitenden Pfad (56) in der Vorwärtsrichtung (F) bereitstellt, um Strom, der in der Vorwärtsrichtung (F) durch die entsprechende Schaltbaugruppe (62) fließt, von der entsprechenden Schaltbaugruppe (62) wegzuleiten.

2. Elektrische Baugruppe nach Anspruch 1, wobei ein oder mehrere Bypass-Schaltkreise zum Schutz (50, 80) ein zweites Halbleiterschutzelement (82) einschließen, das angeordnet ist, um einen zweiten stromleitenden Pfad (56) in einer zweiten umgekehrten Richtung (R) entgegengesetzt zu der Vorwärtsrichtung (F) bereitzustellen, um Strom, der in einer umgekehrten Richtung durch die entsprechende Schaltbaugruppe (62) fließt, von der Schaltbaugruppe (62) wegzuleiten.

3. Elektrische Baugruppe nach Anspruch 2, wobei das zweite Halbleiterschutzelement (82) von einem oder mehreren Bypass-Schaltkreisen zum Schutz (80) ein passives Stromrückflussverhindererelement (86) ist oder einschließt, das es fortlaufend erlaubt, dass Strom dahindurch in der umgekehrten Richtung (R) fließt, während es fortlaufend den Stromfluss dahindurch in der Vorwärtsrichtung (F) sperrt.

4. Elektrische Baugruppe nach Anspruch 2, wobei das zweite Halbleiterschutzelement (82) von einem oder mehreren Bypass-Schaltkreisen zum Schutz (80) ein Halbleiterschalter (54, 104), der selektiv zwischen leitenden und nicht leitenden Zuständen schaltbar ist, ist oder einen solchen einschließt.

5. Elektrische Baugruppe nach einem der vorstehenden Ansprüche, wobei das erste Halbleiterschutzelement (52) von einem oder mehreren Bypass-Schaltkreisen zum Schutz (50, 80) mit einer Strombegrenzungsdrossel (90) in Reihe geschaltet ist.

6. Elektrische Baugruppe nach einem der vorstehenden Ansprüche, wobei das erste Halbleiterschutzelement (52) von einem oder mehreren Bypass-Schaltkreisen zum Schutz (50, 80) mit einem Snubber-Schaltkreis (92) parallel geschaltet ist.

7. Elektrische Baugruppe nach einem der vorstehenden Ansprüche, wobei das oder jedes erste Halbleiterschutzelement (52, 82) in Wirkverbindung mit einer lokalen Steuereinheit (110) angeordnet ist, die programmiert ist, um mindestens ein erstes Halbleiterschutzelement (52) in seinen leitenden Zustand zu schalten.

8. Elektrische Baugruppe nach Anspruch 7, wobei die oder jede lokale Steuereinheit (110) angeordnet ist, um Leistung von einer benachbarten Komponente innerhalb der elektrischen Baugruppe (60, 70) aufzunehmen.

9. Elektrische Baugruppe nach Anspruch 7 oder Anspruch 8, wobei die oder jede lokale Steuereinheit (110) weiter programmiert ist, um gemäß einem Betriebszustand einer Steuereinheit einer höheren Ebene, mit der sie, im Gebrauch, in Wirkverbindung angeordnet ist, zu wirken.

## Revendications

1. Ensemble électrique (60), destiné à être utilisé dans une partie de branche (12, 22) d'une branche de convertisseur (14) au sein d'un convertisseur de puissance CCHT (16), l'ensemble électrique (60) comprenant une pluralité d'ensembles de commutation (62), chaque ensemble de commutation (62) incluant une pluralité de sous-modules à maillon de chaîne (44) agencés pour définir un module à maillon de chaîne (42), chaque sous-module à maillon de chaîne (44) incluant au moins un commutateur à semi-conducteur (28) et au moins un dispositif de stockage d'énergie (38), le ou chaque commutateur à semi-conducteur (28) et le ou chaque dispositif de stockage d'énergie (38) de chaque sous-module à maillon de chaîne (44) se combinant pour fournir sélectivement une source de tension, chaque commutateur à semi-conducteur (28) pouvant être commuté de manière sélective entre des conditions conductrices et non conductrices, chaque commutateur à semi-conducteur (28) dans la condition conductrice permettant au courant de circuler à travers le commutateur à semi-conducteur (28) dans une première direction avant et de cette façon à travers ledit ensemble de commutation (62) dans la même direction avant, chaque ensemble de commutation (62) présentant un circuit de protection de dérivation (50) connecté en parallèle avec celui-ci, chaque circuit de protection de dérivation (50) incluant un premier élément de protection à semi-conducteur (52) pouvant être commuté sélectivement entre des conditions conductrices et non conductrices, le ou chaque dit premier élément de protection à semi-conducteur (52), alors dans la condition conductrice, fournissant un premier trajet conducteur de courant (56) dans la direction avant (F) pour détourner le courant circulant dans la direction avant (F) à travers l'ensemble de commutation (62) correspondant à distance dudit ensemble de commutation (62) correspondant.

2. Ensemble électrique selon la revendication 1, dans lequel un ou plusieurs circuits de protection de dérivation (50, 80) inclut un second élément de protection à semi-conducteur (82) agencé pour fournir un second trajet conducteur de courant (56) dans une seconde direction inverse (R) opposée à la direction avant (F) pour détourner le courant circulant dans une direction inverse à travers l'ensemble de commutation (62) correspondant à distance dudit ensemble de commutation (62).

3. Ensemble électrique selon la revendication 2, dans lequel le second élément de protection à semi-conducteur (82) d'un ou plusieurs circuits de protection de dérivation (80) est ou inclut un élément de vérification de courant passif (86) qui permet en continu au courant de circuler à travers celui-ci dans la direction inverse (R), tout en bloquant en continu la circulation de courant à travers celui-ci dans la direction avant (F).

4. Ensemble électrique selon la revendication 2, dans lequel le second élément de protection à semi-conducteur (82) d'un ou plusieurs circuits de protection de dérivation (80) est ou inclut un commutateur à semi-conducteur (54, 104) pouvant être commuté sélectivement entre des conditions conductrices et non conductrices.

5. Ensemble électrique selon l'une quelconque des revendications précédentes, dans lequel le premier élément de protection à semi-conducteur (52) d'un ou plusieurs circuits de protection de dérivation (50, 80) est connecté en série à un réacteur de limitation de courant (90).

6. Ensemble électrique selon l'une quelconque des revendications précédentes, dans lequel le premier élément de protection à semi-conducteur (52) d'un ou plusieurs circuits de protection de dérivation (50, 80) est connecté en parallèle à un circuit d'amortissement (92).

7. Ensemble électrique selon l'une quelconque des revendications précédentes, dans lequel le ou chaque premier élément de protection à semi-conducteur (52, 82) est agencé en communication fonctionnelle avec une unité de commande locale (110) programmée pour au moins commuter un dit premier élément de protection à semi-conducteur (52) dans sa condition conductrice.

8. Ensemble électrique selon la revendication 7, dans lequel la ou chaque unité de commande locale (110) est agencée pour tirer de la puissance d'un composant adjacent dans l'ensemble électrique (60, 70).

9. Ensemble électrique selon la revendication 7 ou la revendication 8, dans lequel la ou chaque unité de commande locale (110) est programmée en outre pour agir conformément à une condition fonctionnelle d'une unité de commande de plus haut niveau avec laquelle, lors d'une utilisation, elle est agencée en communication opérationnelle.
